# EUROPEAN PATENT APPLICATION

(11) **EP 4 607 295 A1**
(43) Date of publication of application: **27.08.2025**
(21) Application number: 25157626.0
(22) Date of filing: 13.02.2025
(51) Int. Cl.: G05B 13/02

(54) **CONTROL APPARATUS, CONTROL SYSTEM, AND CONTROL METHOD**

(30) Priority: 26.02.2024 JP 2024026793
(71) Applicant: Yokogawa Electric Corporation, Tokyo 180-8750 (JP)
(72) Inventor: NAKAMURA, Ryosuke, Musashino-shi, Tokyo, 180-8750, (JP); KOHASE, Yu, Musashino-shi, Tokyo, 180-8750, (JP)
(74) Representative: Winter, Brandl - Partnerschaft mbB

(57) **Abstract**

A control apparatus (2) performs feedback control on a control target device (3). The control apparatus includes a first processing unit (13) configured to acquire a first output value related to feedback control on the control target device by using AI processing, and a second processing unit (14) configured to acquire a second output value related to the feedback control by using non-AI processing. The control apparatus includes a correction unit (16) configured to correct a selection ratio of the first output value and the second output value based on a degree of reliability of the first output value, and a control unit (12) configured to output a control signal for performing feedback control on the control target device based on the selection ratio.

## Description

### BACKGROUND OF THE INVENTION

### 1. Field of the Invention

The present invention relates to a control apparatus, a control system, and a control method.

### 2. Description of the Related Art

For example, as a plant optimization support apparatus, a control apparatus that has a feedback control unit for adjusting an operation amount of operation on a plant process of a control target device in accordance with a difference between a control amount target value and a control amount measured value and that has a built-in machine learning calculation unit has been known.

The machine learning calculation unit generates a machine learning model by training using accumulated measured values of the control target device, and estimates a control amount by adopting a measured value that is acquired from the plant process at the current time point with reference to the generated machine learning model. The machine learning calculation unit determines the control amount target value by using a difference between a set target value that is a control amount target value given in advance and an estimated control amount that is obtained by estimation. As a result, the feedback control unit is able to perform feedback control on the control target device.
Patent Literature 1: Japanese Unexamined Patent Application Publication No. 2018-106561
Patent Literature 2: Japanese Unexamined Patent Application Publication No. 2021-152702

However, the machine learning model is a leaning model that is inductively obtained with data, and in reality, it is not always possible to obtain appropriate output with respect to untrained data, such as extrapolated data. In particular, in a plant, stable operation of a control target device is needed, and therefore, although efficient results may be obtained in many cases by adopting the machine learning model, it may be difficult to ensure the stable operation in few cases. Therefore, there is a need for a control apparatus that is able to realize stable operation of a control target device while introducing an Artificial Intelligence (AI) process, such as a machine learning model.

According to one aspect, an object is to provide a control apparatus that is able to realize stable operation of a control target device while introducing an AI process.

### SUMMARY OF THE INVENTION

According to an aspect of an embodiment, a control apparatus (2) performs feedback control on a control target device (3). The control apparatus includes a first processing unit (13), a second processing unit (14), a correction unit (16) and a control unit (12). The first processing unit (13) acquires a first output value related to feedback control on the control target device by using Artificial Intelligence (AI) processing. The second processing unit (14) acquires a second output value related to the feedback control by using non-AI processing. The correction unit (16) corrects a selection ratio of the first output value and the second output value based on a degree of reliability of the first output value. The control unit (12) outputs a control signal for performing feedback control on the control target device based on the selection ratio.

According to an aspect of an embodiment, the control system (1) includes a control target device (3) and a control apparatus (2) that performs feedback control on the control target device. The control apparatus (2) includes a first processing unit (13), a second processing unit (14), a correction unit (16) and a control unit (12). The first processing unit (13) acquires a first output value related to feedback control on the control target device by using Artificial Intelligence (AI) processing. The second processing unit (14) acquires a second output value related to the feedback control by using non-AI processing. The correction unit (16) corrects a selection ratio of the first output value and the second output value based on a degree of reliability of the first output value. The control unit (12) outputs a control signal for performing feedback control on the control target device based on the selection ratio.

### BRIEF DESCRIPTION OF THE DRAWINGS

FIG. 1A is an explanatory diagram illustrating an example of a control system according to a first embodiment;
FIG. 1B is a flowchart illustrating an example of processing operation related to a control process performed by a control apparatus;
FIG. 2 is an explanatory diagram illustrating an example of a control system according to a second embodiment;
FIG. 3 is an explanatory diagram illustrating an example of a control system according to a third embodiment;
FIG. 4 is an explanatory diagram illustrating an example of a control system according to a fourth embodiment;
FIG. 5 is an explanatory diagram illustrating an example of a control system according to a fifth embodiment; and
FIG. 6 is an explanatory diagram illustrating an example of a hardware configuration of a computer.

### DETAILED DESCRIPTION OF THE PREFERRED EMBODIMENTS

Embodiments of a control apparatus or the like disclosed in the present application will be described in detail below based on the drawings. The disclosed technology is not limited by the embodiments below. In addition, the embodiments described below may be appropriately modified as long as no contradiction is derived.

### First Embodiment

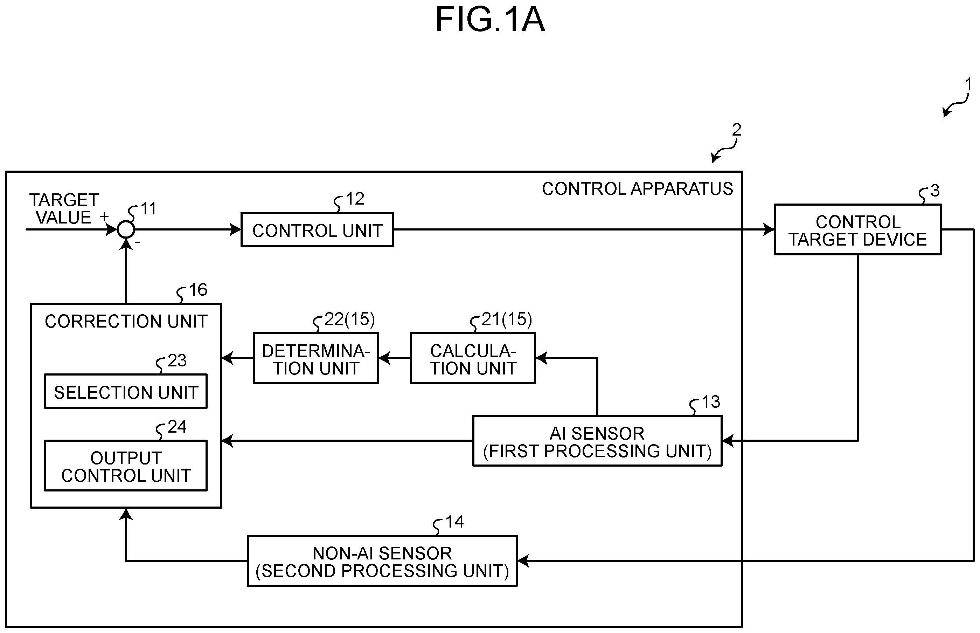

FIG. 1A is an explanatory diagram illustrating an example of a control system 1 according to a first embodiment. The control system 1 illustrated in FIG. 1A is a feedback control system that includes a control apparatus 2 and a control target device 3. The control target device 3 is a device, such as a boiler, that is to be subjected to feedback control. The control apparatus 2 is a feedback control apparatus that performs feedback control on the control target device 3. The control apparatus 2 includes an input unit 11, a control unit 12, an Artificial Intelligence (AI) sensor 13, a non-AI sensor 14, a reliability determination unit 15, and a correction unit 16.

The input unit 11 receives input of a target value and a feedback value, and inputs a correction value that is a difference between the target value and the feedback value to the control unit 12. The control unit 12 calculates an operation amount for controlling the control target device 3 based on the correction value that is the difference between the target value and the feedback value and based on a set algorithm, and outputs a control signal corresponding to the calculated operation amount to the control target device 3. The control target device 3 controls drive in accordance with the control signal that is received from the control unit 12.

The AI sensor 13 is a first processing unit, such as a first sensor, that acquires a first output value related to feedback control on the control target device 3 by using AI processing. The AI sensor 13 is a sensor that estimates, with use of input of an image that is captured inside the control target device 3, such as a boiler, and a neural network, temperature, pressure, or the like of the boiler from states of a plurality of portions in the boiler, and detects the estimated temperature, the estimated pressure, or the like as the first output value.

The non-AI sensor 14 is a second processing unit, such as a second sensor, that acquires a second output value related to the feedback control on the control target device 3 without using the AI processing. The non-AI sensor 14 is a sensor that actually measures the temperature, the pressure, or the like of the control target device 3, such as a boiler, and detects the actually measured temperature, the actually measured pressure, or the like as the second output value.

The reliability determination unit 15 calculates a degree of reliability of the first output value that is output by the AI sensor 13, and calculates reliability of the AI sensor 13 based on the calculated degree of reliability. The reliability determination unit 15 includes a calculation unit 21 and a determination unit 22. The calculation unit 21 quantifies reliability of the first output value of the AI sensor 13, and calculates the degree of reliability of the first output value. As a calculation method of the degree of reliability, for example, a method of using only the first output value that is obtained from the AI sensor 13 or a method of using the first output value that is obtained from the AI sensor 13 and other data may be adopted.

As the method of using only the first output value that is obtained from the AI sensor 13, various kinds of methods, such as simple output of the first output value of the AI sensor 13, distribution information on the first output value of the AI sensor 13, an intermediate feature value distribution of training data, reconstruction error including an auto encoder, or a dropout mechanism, may be adopted. Meanwhile, the distribution information on the first output value is not limited to, for example, an estimated value as the output of the AI sensor 13, but includes a variance value. As the method of using the first output value that is obtained from the AI sensor 13 and other data, for example, a method using a Pearson product-moment correlation coefficient may be adopted.

The determination unit 22 determines whether or not the AI sensor 13 is reliable based on the degree of reliability of the first output value that is calculated by the calculation unit 21. The determination unit 22 sets a reference value, such as a predetermined threshold or a predetermined amount of temporal change, and determines whether or not the AI sensor 13 is reliable based on a result of comparison between the degree of reliability and the reference value.

The determination unit 22 determines whether or not the degree of reliability of the first output value is equal to or larger than the predetermined threshold, and determines that the AI sensor 13 is reliable when the degree of reliability of the first output value is equal to or larger than the predetermined threshold. Further, the determination unit 22 determines that the AI sensor 13 is not reliable when the degree of reliability of the first output value is smaller than the predetermined threshold.

Furthermore, the determination unit 22 determines whether or not an amount of temporal change of the degree of reliability of the first output value is equal to larger than the predetermined amount of change, and determines that the AI sensor 13 is reliable when the amount of temporal change of the degree of reliability of the first output value is smaller than the predetermined amount of change. Moreover, the determination unit 22 determines that the AI sensor 13 is not reliable when the amount of temporal change of the degree of reliability of the first output value is equal to or larger than the predetermined amount of change.

The correction unit 16 corrects a selection ratio of the first output value and the second output value based on a determination result of the reliability of the AI sensor 13. The correction unit 16 includes a selection unit 23 and an output control unit 24. When the AI sensor 13 is reliable, the selection unit 23 selects only the first output value that is received from the AI sensor 13, from among the first output value and the second output value. When the AI sensor 13 is not reliable, the selection unit 23 selects only the second output value that is received from the non-AI sensor 14, from among the first output value and the second output value.

The output control unit 24 inputs the feedback value to the input unit 11 by adopting the first output value of the AI sensor 13 or the second output value of the non-AI sensor 14, which is selected by the selection unit 23, as an output value.

Further, the input unit 11 inputs the correction value that is the difference between the target value and the feedback value that is received from the correction unit 16 to the control unit 12. Furthermore, the control unit 12 calculates an adjustment amount of the control target device 3 based on the correction value and a set algorithm, and outputs a control signal corresponding to the calculated adjustment amount to the control target device 3. As a result, the control target device 3 is able to operate stably.

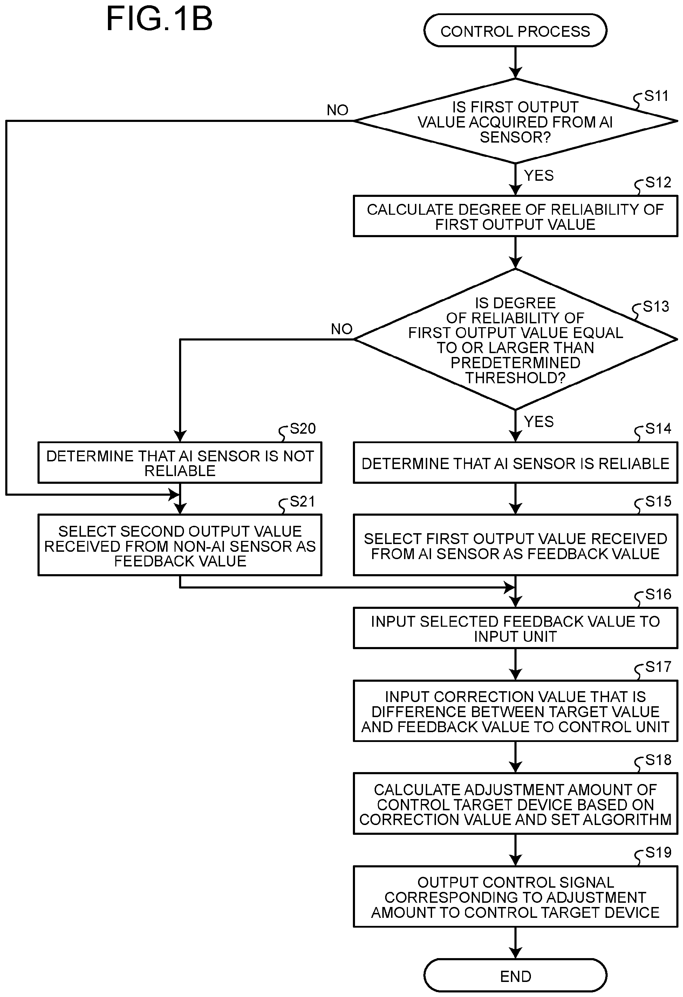

FIG. 1B is a flowchart illustrating an example of processing operation related to a control process performed by the control apparatus 2. The control process illustrated in FIG. 1B is a process of controlling the control target device 3 based on the first output value received from the AI sensor 13 or the second output value of the non-AI sensor 14. In FIG. 1B, the control apparatus 2 determines whether or not the first output value is acquired from the AI sensor 13 (Step S11). When the first output value is acquired from the AI sensor 13 (Step S11: Yes), the calculation unit 21 in the control apparatus 2 calculates the degree of reliability of the first output value (Step S12).

The determination unit 22 in the control apparatus 2 determines whether or not the calculated degree of reliability of the first output value is equal to or larger than a predetermined threshold (Step S13). When the degree of reliability of the first output value is equal to or larger than the predetermined threshold (Step S13: Yes), the determination unit 22 determines that the AI sensor 13 is reliable (Step S14).

When it is determined that the AI sensor 13 is reliable, the selection unit 23 in the control apparatus 2 selects the first output value received from the AI sensor 13 as the feedback value (Step S15), and inputs the selected feedback value to the input unit 11 (Step S16).

The input unit 11 in the control apparatus 2 inputs the correction value that is the difference between the input target value and the input feedback value to the control unit 12 (Step S17). The control unit 12 in the control apparatus 2 calculates the adjustment amount of the control target device 3 based on the correction value and the set algorithm (Step S18). The control unit 12 outputs a control signal corresponding to the calculated adjustment amount to the control target device 3 (Step S19), and terminates the processing operation illustrated in FIG. 1B. As a result, the control target device 3 is able to operate stably.

Furthermore, when the degree of reliability of the first output value is not equal to or larger than the predetermined threshold (Step S13: No), that is, when the degree of reliability of the first output value is smaller than the predetermined value, the determination unit 22 determines that the AI sensor 13 is not reliable (Step S20). When it is determined that the AI sensor 13 is not reliable, the selection unit 23 selects the second output value received from the non-AI sensor 14 as the feedback value (Step S21), and goes to the process at Step S16 for inputting the selected feedback value to the input unit 11.

Moreover, when the first output value is not acquired from the AI sensor 13 (Step S11: No), the selection unit 23 goes to the process at Step S21 for selecting the second output value received from the non-AI sensor 14 as the feedback value.

The control apparatus 2 of the first embodiment selects the first output value of the AI sensor 13 or the second output value of the non-AI sensor 14 based on the degree of reliability of the first output value received from the AI sensor 13. The control apparatus 2 outputs a control signal corresponding to the selected first output value or the selected second output value to the control target device 3. As a result, the control apparatus 2 is able to realize stable operation of the control target device 3 while introducing the AI sensor 13 with the machine learning function.

The control apparatus 2 selects the second output value of the non-AI sensor 14 instead of selecting the first output value of the AI sensor 13 when it is determined that the degree of reliability of the first output value is smaller than the predetermined threshold and the AI sensor 13 is not reliable. The control apparatus 2 selects the first output value of the AI sensor 13 when it is determined that the degree of reliability of the first output value is equal to or larger than the predetermined threshold and the AI sensor 13 is reliable. The control apparatus 2 outputs a control signal corresponding to the selected first output value or the selected second output value to the control target device 3. As a result, the control apparatus 2 is able to realize stable operation of the control target device 3 while introducing the AI sensor 13 with the machine learning function.

The control apparatus 2 selects the second output value of the non-AI sensor 14 instead of selecting the first output value of the AI sensor 13 when it is determined that the amount of temporal change of the degree of reliability of the first output value is equal to or larger than the predetermined amount of change and the AI sensor 13 is not reliable. The control apparatus 2 selects the first output value of the AI sensor 13 when it is determined that the amount of temporal change of the degree of reliability of the first output value is smaller than the predetermined threshold and the AI sensor 13 is reliable. The control apparatus 2 outputs a control signal corresponding to the selected first output value or the selected second output value to the control target device 3. As a result, the control apparatus 2 is able to realize stable operation of the control target device 3 while introducing the AI sensor 13 with the machine learning function.

Meanwhile, the example has been described in which the control apparatus 2 of the first embodiment selects one of the first output value of the AI sensor 13 and the second output value of the non-AI sensor 14 based on the degree of reliability of the first output value of the AI sensor 13, but embodiments are not limited to this example, and a different embodiment will be described below as a second embodiment.

### Second Embodiment

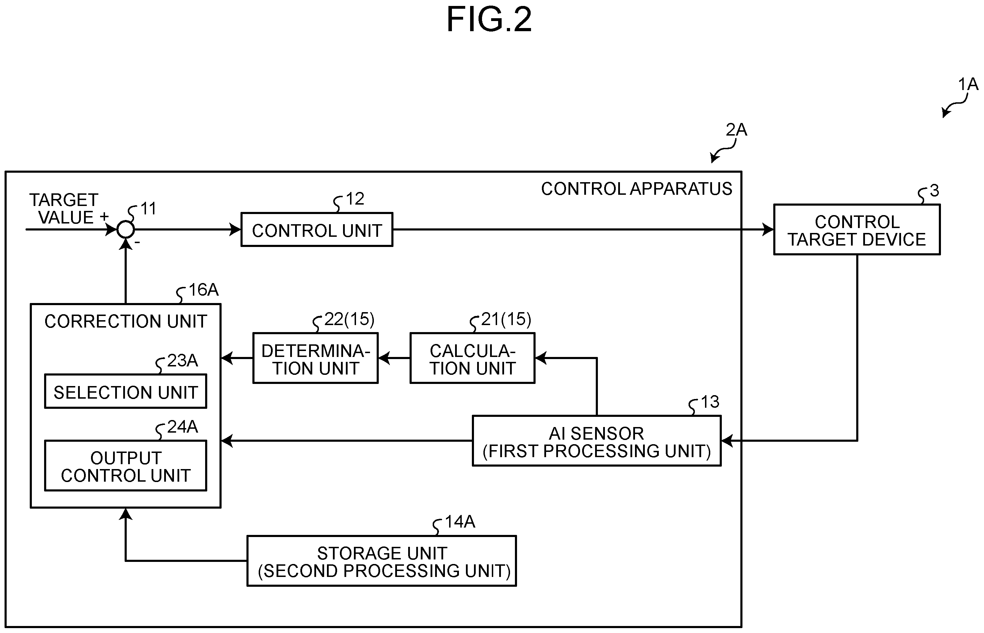

FIG. 2 is an explanatory diagram illustrating an example of a control system 1A according to the second embodiment. The control system 1A illustrated in FIG. 2 is a feedback control system that includes a control apparatus 2A and the control target device 3. The control apparatus 2A of the second embodiment is different from the control apparatus 2 of the first embodiment in that the control apparatus 2A includes a storage unit 14A that stores therein, in advance, a conservative sensor value, instead of the non-AI sensor 14.

The storage unit 14A is a second processing unit that stores therein, in advance, the conservative sensor value. The conservative sensor value is a feedback value that serves as a second output value that is set in advance to cause the control target device 3 to operate normally.

A correction unit 16A corrects a selection ratio of the first output value and the second output value based on a determination result of the reliability of the AI sensor 13. The correction unit 16A includes a selection unit 23A and an output control unit 24A. When the AI sensor 13 is reliable, the selection unit 23A selects only the first output value that is received from the AI sensor 13 from among the first output value and the second output value. When the AI sensor 13 is not reliable, the selection unit 23A selects only the second output value that is read from the storage unit 14A from among the first output value and the second output value.

The output control unit 24A inputs the feedback value to the input unit 11 by adopting the first output value of the AI sensor 13 or the second output value of the storage unit 14A, which is selected by the selection unit 23A, as an output value.

Further, the input unit 11 inputs the correction value that is the difference between the target value and the feedback value that is received from the correction unit 16A to the control unit 12. Furthermore, the control unit 12 calculates the adjustment amount of the control target device 3 based on the correction value and the set algorithm, and outputs a control signal corresponding to the calculated adjustment amount to the control target device 3. As a result, the control target device 3 is able to operate stably.

The control apparatus 2A of the second embodiment selects the first output value of the AI sensor 13 or the second output value of the storage unit 14A based on the degree of reliability of the first output value received from the AI sensor 13. The control apparatus 2A outputs a control signal corresponding to the selected first output value or the selected second output value to the control target device 3. As a result, the control apparatus 2A is able to realize stable operation of the control target device 3 while introducing the AI sensor 13 with the machine learning function.

The control apparatus 2A selects the second output value that is read from the storage unit 14A instead of selecting the first output value of the AI sensor 13 when it is determined that the degree of reliability of the first output value is smaller than the predetermined threshold and the AI sensor 13 is not reliable. The control apparatus 2A selects the first output value of the AI sensor 13 when it is determined that the degree of reliability of the first output value is equal to or larger than the predetermined threshold and the AI sensor 13 is reliable. The control apparatus 2A outputs a control signal corresponding to the selected first output value or the selected second output value to the control target device 3. As a result, the control apparatus 2A is able to realize stable operation of the control target device 3 while introducing the AI sensor 13 with the machine learning function.

The control apparatus 2A selects the second output value of the storage unit 14A instead of selecting the first output value of the AI sensor 13 when it is determined that the amount of temporal change of the degree of reliability of the first output value is equal to or larger than the predetermined amount of change and the AI sensor 13 is not reliable. The control apparatus 2A selects the first output value of the AI sensor 13 when it is determined that the amount of temporal change of the degree of reliability of the first output value is smaller than the predetermined threshold and the AI sensor 13 is reliable. The control apparatus 2A outputs a control signal corresponding to the selected first output value or the selected second output value to the control target device 3. As a result, the control apparatus 2A is able to realize stable operation of the control target device 3 while introducing the AI sensor 13 with the machine learning function.

Meanwhile, the example has been described in which the correction unit 16 of the first embodiment selects one of the first output value received from the AI sensor 13 and the second output value received from the non-AI sensor 14 based on the degree of reliability of the first output value of the AI sensor 13. However, embodiments are not limited to this example, and a different embodiment will be described below as a third embodiment.

### Third Embodiment

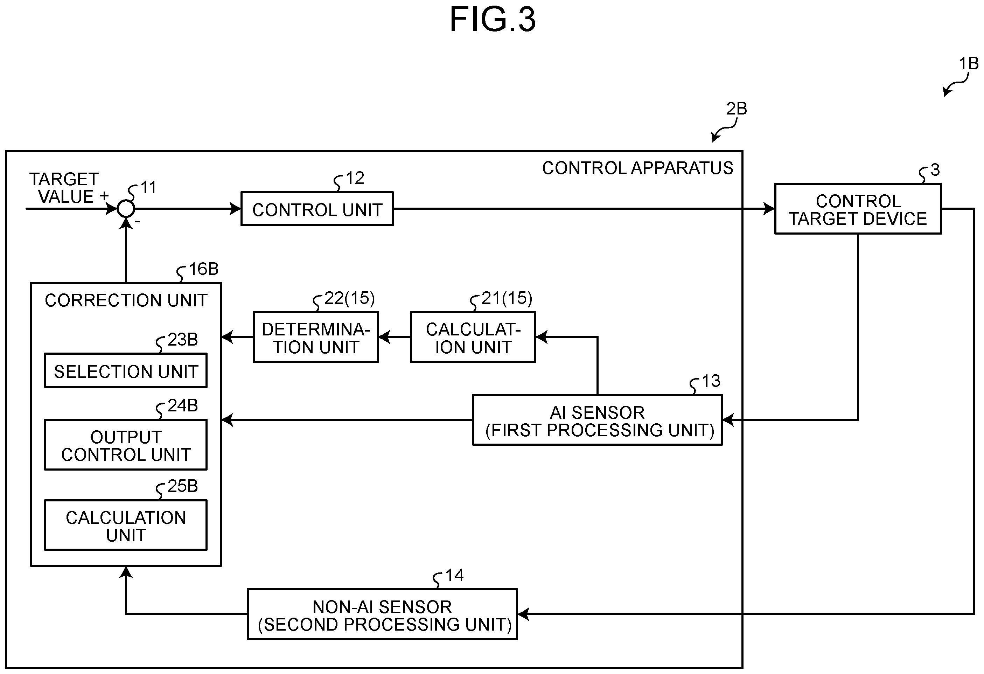

FIG. 3 is an explanatory diagram illustrating an example of a control system 1B according to the third embodiment. Meanwhile, the same components as those of the control system 1 of the first embodiment are denoted by the same reference symbols, and explanation of the same configurations and operation will be omitted.

The control system 1B illustrated in FIG. 3 is a feedback control system that includes a control apparatus 2B and the control target device 3. The control apparatus 2B of the third embodiment is different from the control apparatus 2 of the first embodiment in that the control apparatus 2B includes a correction unit 16B that corrects a selection ratio of the first output value of the AI sensor 13 and the second output value of the non-AI sensor 14 based on the degree of reliability of the first output value of the AI sensor 13, mixes the first output value and the second output value in a hybrid manner, and selects the hybrid mixture.

The correction unit 16B corrects the selection ratio of the first output value of the AI sensor 13 and the second output value of the non-AI sensor 14 based on a determination result of the reliability of the AI sensor 13, mixes the first output value and the second output value in a hybrid manner, and selects the hybrid mixture. The correction unit 16B includes a calculation unit 25B, a selection unit 23B, and an output control unit 24B. The calculation unit 25B calculates the selection ratio of the first output value and the second output value based on a difference between the degree of reliability of the first output value and a predetermined threshold. Meanwhile, the selection ratio is calculated by, for example, a weighted average value of the second output value of the non-AI sensor 14 and the first output value of the AI sensor 13. The selection unit 23B mixes the first output value and the second output value in a hybrid manner and selects the hybrid mixture based on the calculated selection ratio.

The output control unit 24B calculates an output value based on the selection ratio of the first output value of the AI sensor 13 and the second output value of the non-AI sensor 14, which is selected by the selection unit 23B, and inputs the feedback value to the input unit 11 as the calculated output value.

Further, the input unit 11 inputs the correction value that is the difference between the target value and the feedback value that is received from the correction unit 16B to the control unit 12. Furthermore, the control unit 12 calculates the adjustment amount of the control target device 3 based on the correction value and the set algorithm, and outputs a control signal corresponding to the calculated adjustment amount to the control target device 3. As a result, the control target device 3 is able to operate stably.

The control apparatus 2B of the third embodiment calculates the selection ratio of the first output value of the AI sensor 13 and the second output value of the non-AI sensor 14 based on the degree of reliability of the first output value of the AI sensor 13. Further, the control apparatus 2B calculates the output value based on the selection ratio of the first output value and the second output value, and inputs the feedback value of the calculated output value to the input unit 11. The control apparatus 2B outputs a control signal corresponding to the selected first output value and the selected second output value to the control target device 3. As a result, the control apparatus 2B is able to realize stable operation of the control target device 3 while introducing the AI sensor 13 with the machine learning function.

Meanwhile, the example has been described in which the control apparatus 2 of the first embodiment determines whether or not the AI sensor 13 is reliable based on the degree of reliability of the first output value of the AI sensor 13. However, embodiments are not limited to the AI sensor 13, but, for example, it may be possible to determine whether or not the AI processing unit is reliable based on the degree of reliability of the first output value that is output of the AI processing unit used in the control unit 12, and this embodiment will be described below as a fourth embodiment.

### Fourth Embodiment

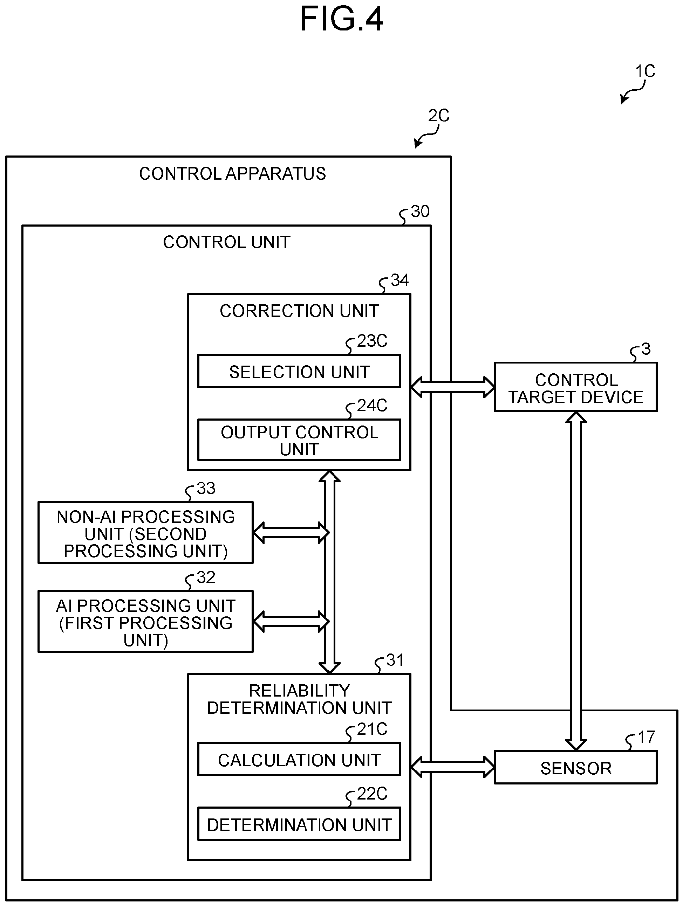

FIG. 4 is an explanatory diagram illustrating an example of a feedback control system 1C according to the fourth embodiment. The control system 1C illustrated in FIG. 4 is a feedback control system that includes a control apparatus 2C and the control target device 3. The control target device 3 is a device, such as a motor, for example. The control target device 3 controls drive in accordance with a control signal that is received from the control apparatus 2C. The control apparatus 2C includes a sensor 17 and a control unit 30. The sensor 17 is a sensor that detects an output signal from the control target device 3, such as the number of rotations of the motor. The control unit 30 outputs a control signal for controlling drive of the control target device 3, such as for changing the number of rotations of the motor, to the control target device 3.

The control unit 30 includes a reliability determination unit 31, an AI processing unit 32, a non-AI processing unit 33, and a correction unit 34. The AI processing unit 32 is a first control unit in a first processing unit that outputs a first control signal that is a first output value for controlling the control target device 3 by using a sensor value that is acquired from the sensor 17 and a predetermined AI model.

The non-AI processing unit 33 is a second control unit in a second processing unit that outputs a second control signal that is a second output value for controlling the control target device 3 based on the sensor value that is acquired from the sensor 17. The non-AI processing unit 33 may output an alarm when it is difficult to output the second control signal.

The reliability determination unit 31 determines whether or not the AI processing unit 32 is reliable based on the first output value that is output by the AI processing unit 32. The reliability determination unit 31 includes a calculation unit 21C and a determination unit 22C. The calculation unit 21C calculates a degree of reliability of the first output value of the AI processing unit 32.

The determination unit 22C determines whether or not the AI processing unit 32 is reliable based on the degree of reliability of the first output value of the AI processing unit 32 calculated by the calculation unit 21C. The determination unit 22C sets a reference value, such as a threshold or a predetermined amount of temporal change, and determines whether or not the AI processing unit 32 is reliable the degree of reliability based on a result of comparison between the degree of reliability and the reference value.

The determination unit 22C determines whether or not the degree of reliability of the first output value is equal to or larger than the predetermined threshold, and determines that the AI processing unit 32 is reliable when the degree of reliability of the first output value is equal to or larger than the predetermined threshold. Further, the determination unit 22C determines that the AI processing unit 32 is not reliable when the degree of reliability of the first output value is smaller than the predetermined threshold.

Furthermore, the determination unit 22C determines whether or not the amount of temporal change of the degree of reliability of the first output value is equal to or larger than the predetermined amount of change, and determines that the AI processing unit 32 is reliable when the amount of temporal change of the degree of reliability of the first output value is smaller than the predetermined amount of change. Moreover, the determination unit 22C determines that the AI processing unit 32 is not reliable when the amount of temporal change of the degree of reliability of the first output value is equal to or larger than the predetermined amount of change.

The correction unit 34 corrects a selection ratio of the first output value and the second output value based on a determination result of the reliability of the AI processing unit 32. The correction unit 34 includes a selection unit 23C and an output control unit 24C.

When the AI processing unit 32 is reliable, the selection unit 23C selects only the first output value that is received from the AI processing unit 32, from among the first output value and the second output value. When the AI processing unit 32 is not reliable, the selection unit 23C selects only the second output value that is received from the non-AI processing unit 33, from among the first output value and the second output value.

The output control unit 24C outputs, as a control signal, the first control signal that is the first output value of the AI processing unit 32 or the second control signal that is the second output value of the non-AI processing unit 33, which is selected by the selection unit 23C, to the control target device 3. As a result, the control target device 3 is able to operate stably.

The control apparatus 2C of the fourth embodiment selects the first output value of the AI processing unit 32 or the second output value of the non-AI processing unit 33 based on the degree of reliability of the first output value of the AI processing unit 32. The control apparatus 2C outputs the control signal corresponding to the first control signal that is the selected first output value or the second control signal that is the selected second output value to the control target device 3. As a result, the control apparatus 2C is able to realize stable operation of the control target device 3 while introducing the AI processing unit 32 with the machine learning function.

The control apparatus 2C selects the second output value of the non-AI processing unit 33 instead of selecting the first output value of the AI processing unit 32 when it is determined that the degree of reliability of the first output value is smaller than the predetermined threshold and the AI processing unit 32 is not reliable. The control apparatus 2C selects the first output value of the AI processing unit 32 when it is determined that the degree of reliability of the first output value is equal to or larger than the predetermined threshold and the AI processing unit 32 is reliable. The control apparatus 2C outputs a control signal corresponding to the first control signal that is the selected first output value or the second control signal that is the selected second output value to the control target device 3. As a result, the control apparatus 2C is able to realize stable operation of the control target device 3 while introducing the AI processing unit 32 with the machine learning function.

The control apparatus 2C selects the second output value of the non-AI processing unit 33 instead of selecting the first output value of the AI processing unit 32 when it is determined that the amount of temporal change of the degree of reliability of the first output value is equal to or larger than the predetermined amount of change and the AI processing unit 32 is not reliable. The control apparatus 2C selects the first output value of the AI processing unit 32 when it is determined that the amount of temporal change of the degree of reliability of the first output value is smaller than the predetermined threshold and the AI processing unit 32 is reliable. The control apparatus 2C outputs a control signal corresponding to the first control signal that is the selected first output value or the second control signal that is the selected second output value to the control target device 3. As a result, the control apparatus 2C is able to realize stable operation of the control target device 3 while introducing the AI processing unit 32 with the machine learning function.

Meanwhile, the example has been described in which the control apparatus 2C of the fourth embodiment as described above alternatively selects and outputs the first output value of the AI processing unit 32 or the second output value of the non-AI processing unit 33 based on the degree of reliability of the first output value of the AI processing unit 32. However, the control apparatus 2C calculates the selection ratio while mixing the first output value of the AI processing unit 32 and the second output value of the non-AI processing unit 33 based on the degree of reliability of the first output value of the AI processing unit 32, and generates a control signal corresponding to the first output value of the AI processing unit 32 and the second output value of the non-AI processing unit 33 in accordance with the calculated selection ratio. The control apparatus 2C may output the generated control signal to the control target device 3, and appropriate change may be made.

### Fifth Embodiment

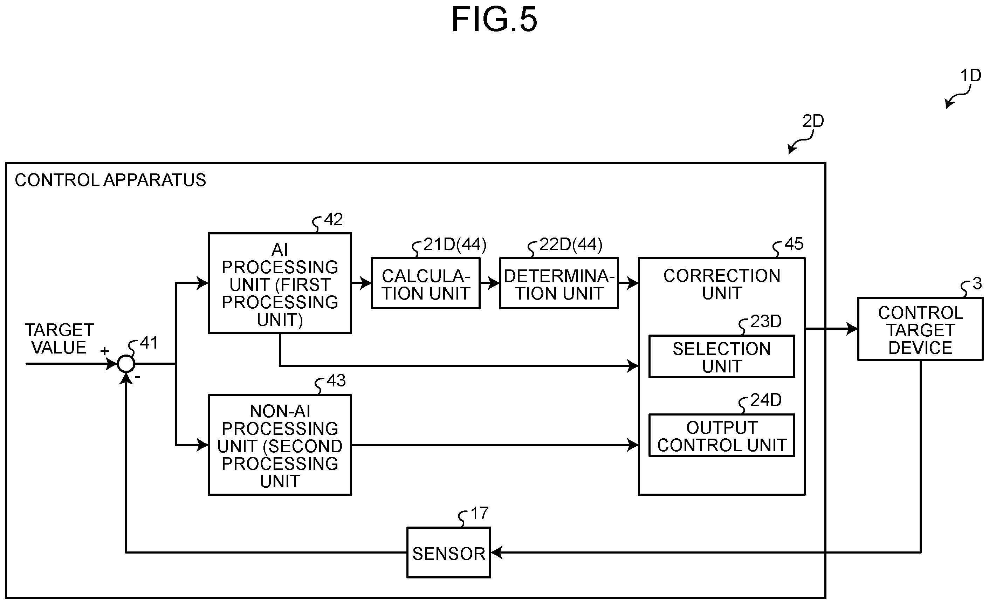

FIG. 5 is an explanatory diagram illustrating an example of a control system 1D according to a fifth embodiment. The control system 1D illustrated in FIG. 5 is a feedback control system that includes a control apparatus 2D and the control target device 3.

The control target device 3 is a device, such as a motor, for example. The control apparatus 2D is a feedback control apparatus that performs feedback control on the control target device 3. The control apparatus 2D includes the sensor 17 and a control unit 40. The sensor 17 is a sensor that detects an output signal from the control target device 3, such as the number of rotations of the motor. The control unit 40 outputs a control signal for controlling drive of the control target device 3, such as for changing the number of rotations of the motor, to the control target device 3.

The control unit 40 includes an input unit 41, an AI processing unit 42, a non-AI processing unit 43, a reliability determination unit 44, and a correction unit 45.

The input unit 41 receives input of the target value and the feedback value that is the sensor value detected by the sensor 17, and outputs a correction value that is a difference between the target value and the feedback value to the AI processing unit 42 and the non-AI processing unit 43.

The AI processing unit 42 is a first control unit in a first processing unit that outputs a first control signal that is a first output value obtained by AI processing, based on the correction value received from the input unit 41 and a set AI algorithm by using AI.

The non-AI processing unit 43 is a second control unit in a second processing unit that outputs a second control signal that is a second output value obtained by non-AI processing, based on the correction value received from the input unit 41 and a set algorithm without using AI.

The reliability determination unit 44 determines whether or not the AI processing unit 42 is reliable based on the degree of reliability of the first output value of the AI processing unit 42. The reliability determination unit 44 includes a calculation unit 21D and a determination unit 22D. The calculation unit 21D calculates the first control signal that is the first output value of the AI processing unit 42.

The determination unit 22D determines whether or not the AI processing unit 42 is reliable based on the degree of reliability of the first output value of the AI processing unit 42 calculated by the calculation unit 21D. The determination unit 22D sets a reference value, such as a threshold or a predetermined amount of temporal change, and determines whether or not the AI processing unit 42 is reliable based on a result of comparison between the degree of reliability and the reference value.

The determination unit 22D determines whether or not the degree of reliability of the first output value is equal to or larger than the predetermined threshold, and determines that the AI processing unit 42 is reliable when the degree of reliability of the first output value is equal to or larger than the predetermined threshold. Further, the determination unit 22D determines that the AI processing unit 42 is not reliable when the degree of reliability of the first output value is smaller than the predetermined threshold.

Furthermore, the determination unit 22D determines whether or not the amount of temporal change of the degree of reliability of the first output value is equal to or larger than the predetermined amount of change, and determines that the AI processing unit 42 is reliable when the amount of temporal change of the degree of reliability of the first output value is smaller than the predetermined amount of change. Moreover, the determination unit 22D determines that the AI processing unit 42 is not reliable when the amount of temporal change of the degree of reliability of the first output value is equal to or larger than the predetermined amount of change.

The correction unit 45 corrects a selection ratio of the first output value and the second output value based on a determination result of the reliability of the AI processing unit 42. The correction unit 45 includes a selection unit 23D and an output control unit 24D.

When the AI processing unit 42 is reliable, the selection unit 23D selects only the first control signal that is the first output value received from the AI processing unit 42, from among the first output value and the second output value. When the AI processing unit 42 is not reliable, the selection unit 23D selects only the second control signal that is the second output value received from the non-AI processing unit 43, from among the first output value and the second output value.

The output control unit 24D outputs, as a control signal, the first control signal that is the first output value of the AI processing unit 42 or the second control signal that is the second output value of the non-AI processing unit 23, which is selected by the selection unit 23D, to the control target device 3. As a result, the control target device 3 is able to operate stably.

The control apparatus 2D according to the fifth embodiment selects the first output value of the AI processing unit 42 or the second output value of the non-AI processing unit 43 based on the degree of reliability of the first output value of the AI processing unit 42. The control apparatus 2D outputs the control signal corresponding to the first control signal that is the selected first output value or the second control signal that is the selected second output value to the control target device 3. As a result, the control apparatus 2D is able to realize stable operation of the control target device 3 while introducing the AI processing unit 42 with the machine learning function.

The control apparatus 2D selects the second output value of the non-AI processing unit 43 instead of selecting the first output value of the AI processing unit 42 when it is determined that the degree of reliability of the first output value is smaller than the predetermined threshold and the AI processing unit 42 is not reliable. The control apparatus 2D selects the first output value of the AI processing unit 42 when it is determined that the degree of reliability of the first output value is equal to or larger than the predetermined threshold and the AI processing unit 42 is reliable. The control apparatus 2D outputs the control signal corresponding to the first control signal that is the selected first output value or the second control signal that is the selected second output value to the control target device 3. As a result, the control apparatus 2D is able to realize stable operation of the control target device 3 while introducing the AI processing unit 42 the machine learning the function with the machine learning function.

The control apparatus 2D selects the second output value of the non-AI processing unit 43 instead of selecting the first output value of the AI processing unit 42 when it is determined that the amount of temporal change of the degree of reliability of the first output value is equal to or larger than the predetermined amount of change and the AI processing unit 42 is not reliable. The control apparatus 2D selects the first output value of the AI processing unit 42 when it is determined that the amount of temporal change of the degree of reliability of the first output value is smaller than the predetermined threshold and the AI processing unit 42 is reliable. The control apparatus 2D outputs the control signal corresponding to the first control signal that is the selected first output value or the second control signal that is the selected second output value to the control target device 3. As a result, the control apparatus 2D is able to realize stable operation of the control target device 3 while introducing the AI processing unit 42 the machine learning the function with the machine learning function.

Meanwhile, the example has been described in which the control apparatus 2D of the fifth embodiment as described above alternatively selects and outputs the first output value of the AI processing unit 42 or the second output value of the non-AI processing unit 43 based on the degree of reliability of the first output value of the AI processing unit 42. However, the control apparatus 2D calculates the selection ratio of the first output value of the AI processing unit 42 and the second output value the non-AI processing unit 43 based on the degree of reliability of the first output value of the AI processing unit 42, and generates a control signal in which the first output value of the AI processing unit 42 and the second output value the non-AI processing unit 43 are reflected in accordance with the calculated selection ratio. The control apparatus 2D may output the generated control signal to the control target device 3, and appropriate change may be made.

Meanwhile, for the sake of convenience of explanation, the examples have been described in which the control apparatuses 2, 2A, and 2B of the first, the second, and the third embodiments adopt the same measurement targets, such as temperature, as the first output value and the second output value, but the same applies to a case in which the first output value and the second output value are different such that the first output value is an oxygen concentration of a boiler and the second output value is temperature of the boiler. The first output value and the second output value may be appropriately changed as long as the first output value and the second output value are output values related to feedback control on the control target device 3.

Furthermore, for each processing function performed by each apparatus, all or any part of the processing function may be implemented by a Central Processing Unit (CPU) and a program analyzed and executed by the CPU or may be implemented as hardware by wired logic.

### Hardware

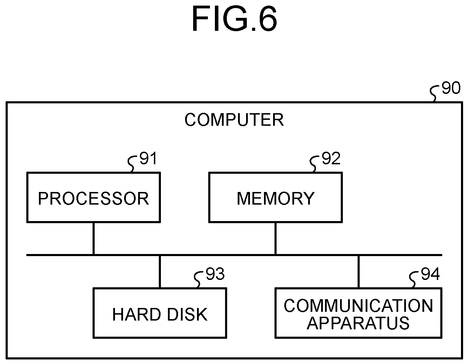

A hardware configuration example for implementing each of the control apparatuses 2, 2A, 2B, 2C, and 2D will be described below. FIG. 6 is an explanatory diagram illustrating an example of a hardware configuration of a computer. Each of the control apparatuses 2, 2A, 2B, 2C, and 2D may be implemented by a computer 90 illustrated in FIG. 6, for example. As illustrated in FIG. 6, the computer 90 includes a processor 91, a memory 92, a hard disk 93, and a communication apparatus 94. The processor 91 is connected to the memory 92, the hard disk 93, and the communication apparatus 94 via a bus.

The communication apparatus 94 is a network interface card or the like and used for communication with the control target device 3. The communication apparatus 94 is used for communication with the AI sensor 13 and the non-AI sensor 14. The hard disk 93 is an auxiliary storage device. The hard disk 93 stores therein various kinds of programs including a program for implementing the functions of each of the control apparatuses 2, 2A, 2B, 2C, and 2D.

The processor 91 reads the various kinds of programs that are stored in the hard disk 93, loads the programs onto the memory 92, and executes the programs. Accordingly, the processor 91 implements the functions of the control apparatuses 2, 2A, 2B, 2C, and 2D. Meanwhile, the functions of the control apparatus 2 are the functions of the input unit 11, the control unit 12, the reliability determination unit 15, and the correction unit 16 illustrated in FIG. 1A. The functions of the control apparatus 2A are the functions of the input unit 11, the control unit 12, the reliability determination unit 15, and the correction unit 16A illustrated in FIG. 2.

The functions of the control apparatus 2B are the functions of the input unit 11, the control unit 12, the reliability determination unit 15, and the correction unit 16B illustrated in FIG. 3. The functions of the control apparatus 2C are the functions of the reliability determination unit 31, the AI processing unit 32, the non-AI processing unit 33, and the correction unit 34 illustrated in FIG. 4. The functions of the control apparatus 2D are the functions of the input unit 41, the AI processing unit 42, the non-AI processing unit 43, the reliability determination unit 44, and the correction unit 45 illustrated in FIG. 5.

According to one embodiment, it is possible to realize stable operation of a control target device while introducing an AI process.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A control apparatus (2) that performs feedback control on a control target device (3), the control apparatus comprising:
a first processing unit (13) configured to acquire a first output value related to feedback control on the control target device by using Artificial Intelligence (AI) processing;
a second processing unit (14) configured to acquire a second output value related to the feedback control by using non-AI processing;
a correction unit (16) configured to correct a selection ratio of the first output value and the second output value based on a degree of reliability of the first output value; and
a control unit (12) configured to output a control signal for performing feedback control on the control target device based on the selection ratio.

2. The control apparatus (2) according to claim 1, further comprising:
a calculation unit (21) configured to calculate the degree of reliability of the first output value by quantifying reliability of the first output value; and
a determination unit (22) configured to determine whether the first processing unit is reliable based on the degree of reliability of the first output value, wherein
the correction unit (16) corrects the selection ratio based on a determination result on whether the first processing unit is reliable.

3. The control apparatus according to claim 2, wherein
the determination unit (22) determines whether the degree of reliability of the first output value is equal to or larger than a predetermined threshold, determines that the first processing unit is reliable when the degree of reliability of the first output value is equal to or larger than the predetermined threshold, and determines that the first processing unit is not reliable when the degree of reliability of the first output value is smaller than the predetermined threshold, and
the correction unit (16) includes a selection unit (23) configured to select only the first output value as the selection ratio when it is determined that the first processing unit is reliable, and select only the second output value as the selection ratio when it is determined that the first processing unit is not reliable.

4. The control apparatus according to claim 2, wherein
the determination unit (22) determines whether an amount of temporal change of the degree of reliability of the first output value is equal to or larger than a predetermined amount of change, determines that the first processing unit is reliable when the amount of temporal change of the degree of reliability of the first output value is smaller than the predetermined amount of change, and determines that the first processing unit is not reliable when the amount of temporal change of the degree of reliability of the first output value is equal to or larger than the predetermined amount of change, and
the correction unit (16) includes a selection unit configured to select only the first output value as the selection ratio when it is determined that the first processing unit is reliable, and select only the second output value as the selection ratio when it is determined that the first processing unit is not reliable.

5. The control apparatus (2) according to any one of claims 1 to 4, wherein
the first processing unit (13) includes a first sensor that acquires output of the control target device as the first output value by using the AI processing, and
the second processing unit (14) includes a second sensor that acquires output of the control target device as the second output value by using the non-AI processing.

6. The control apparatus (2A) according to any one of claims 1 to 4, wherein
the first processing unit (13) includes a first sensor configured to acquire output of the control target device as the first output value by using the AI processing, and
the second processing unit (14A) includes a storage unit configured to store therein output of the control target device that is set in advance as the second output value.

7. The control apparatus (2C) according to any one of claims 1 to 4, wherein
the first processing unit (32) includes a first control unit configured to acquire, as the first output value, a first control signal for performing feedback control on the control target by using the AI processing, and
the second processing unit (33) includes a second control unit configured to acquire, as the second output value, a second control signal for performing feedback control on the control target by using the non-AI processing.

8. The control apparatus (2D) according to any one of claims 1 to 4, wherein
the control unit (40) includes the first processing unit (42) and the second processing unit (43),
the first processing unit (42) includes a first control unit configured to acquire, as the first output value, a first control signal for performing feedback control on the control target by using the AI processing,
the second processing unit (43) includes a second control unit configured to acquire, as the second output value, a second control signal for performing feedback control on the control target by using the non-AI processing, and
the control unit (40) outputs, as the control signal, the first control signal and the second control signal based on the selection ratio of the first output value and the second output value.

9. A control system (1) comprising:
a control target device (3); and
a control apparatus (2) that performs feedback control on the control target device, wherein
the control apparatus (2) includes
a first processing unit (13) configured to acquire a first output value related to feedback control on the control target device by using Artificial Intelligence (AI) processing;
a second processing unit (14) configured to acquire a second output value related to the feedback control by using non-AI processing;
a correction unit (16) configured to correct a selection ratio of the first output value and the second output value based on a degree of reliability of the first output value; and
a control unit (12) configured to output a control signal for performing feedback control on the control target device based on the selection ratio.

10. A control method implemented by a control apparatus (2) that performs feedback control on a control target device (3), the control method comprising:
acquiring a first output value related to feedback control on the control target device by using Artificial Intelligence (AI) processing;
acquiring a second output value related to the feedback control by using non-AI processing;
correcting a selection ratio of the first output value and the second output value based on a degree of reliability of the first output value; and
outputting a control signal for performing feedback control on the control target device based on the selection ratio.
